# EUROPEAN PATENT APPLICATION

(11) **EP 2 894 758 A1**
(43) Date of publication of application: **15.07.2015**
(21) Application number: 14194491.8
(22) Date of filing: 24.11.2014
(51) Int. Cl.: H02J 7/00

(54) **Power supply, power supply charging circuit, power supply charging method and terminal device**

(30) Priority: 09.01.2014 CN 201410010338
(71) Applicant: Xiaomi Inc., Beijing 100085 (CN)
(72) Inventor: Lei, Zhenfei, Haidian District (CN); Sun, Wei, Haidian District (CN); Guo, Diling, Haidian District (CN)
(74) Representative: Hanna, Peter William Derek

(57) **Abstract**

The present disclosure discloses a power supply, a power supply charging circuit, a power supply charging method and a terminal device, wherein the power supply charging method includes: when a power supply (100) is in a charging state, a power supply management chip (200) detects +(S110) a positive electrode voltage of a cell in the power supply; and when it is detected that the positive electrode voltage of the cell is not lower than a preset voltage, controls (S 130) the power supply to be converted from a constant current charging mode into a constant voltage charging mode. The power supply management chip switches the charging mode of the power supply only when the power supply management chip detects that the voltage of the cell reaches the preset voltage, maximally lengthening the time of a constant current charging mode, reducing the entire charging time of the power supply, and increasing the charging speed.

## Description

### TECHNICAL FIELD

The present disclosure generally relates to the field of power supply technology, and more particularly, to a power supply, a power supply charging circuit, a power supply charging method and a terminal device.

### BACKGROUND

Currently, a rechargeable power supply of a terminal device usually includes a cell and a protection circuit, the cell is an electricity storage portion of the rechargeable power supply, and the protection circuit is used to protect charging and discharging processes of the cell.

A single-cell rechargeable power supply (a power supply that includes one cell) usually adopts a constant current-constant voltage mode, that is, the single-cell rechargeable power supply charges in a mode which uses a large constant current at first, and when a voltage of the power supply reaches a threshold value, it begins to be charged in a mode of which uses a constant voltage so that a charging current is gradually decreased. This charging mode may sufficiently lengthen the time of a constant current charging process, thereby greatly reducing the time of a constant voltage charging process, and so shortening the entire charging time on the whole.

However, since a power supply charging control circuit usually detects a positive electrode voltage of the power supply, and the presence of a protection element in the protection circuit causes the positive electrode voltage of the power supply to be higher than a positive electrode voltage of the cell within the power supply, it is not accurate only to determine whether the voltage of the power supply reaches the threshold value, thus the timing of controlling when the constant current mode is to be switched into the constant voltage mode is not precise, such that constant current charging time may not be maximally lengthened, wherein the entire charging time of the power supply is effectively lengthened, and the charging speed is low.

### SUMMARY

Embodiments of the present disclosure provide a power supply, a power supply charging circuit, a power supply charging method and a terminal device, in accordance with claims which follow, to increase the charging speed of a power supply, and shorten charging time.

In order to solve the above technical problems, the embodiments of the present disclosure disclose the following technical solutions.

According to a first aspect of the embodiments of the present disclosure, there is provided a power supply charging method, including: when a power supply is in a charging state, a power supply management chip detecting a positive electrode voltage of a cell in the power supply; and comparing the detected positive electrode voltage of the cell to a preset voltage, and when it is determined that the positive electrode voltage of the cell is not lower than the preset voltage, controlling a charging mode of the power supply to be converted from a constant current charging mode into a constant voltage charging mode.

In combination with the first aspect, in a first possible implementation of the first aspect, the method includes: the power supply management chip being electrically connected to a positive electrode and a negative electrode of the cell, and when the power supply is in the charging state, the power supply management chip detecting a voltage across the two electrodes of the cell.

In combination with the first possible implementation of the first aspect, in a second possible implementation of the first aspect, the power supply management chip is electrically connected to the positive electrode of the cell via a set pin of the power supply.

In combination with the first aspect, in a third possible implementation of the first aspect, the method includes: when the power supply is in the charging state, a power supply protection module in the power supply detecting the positive electrode voltage of the cell, and sending a value of the detected positive electrode voltage to the power supply management chip.

In combination with the third possible implementation of the first aspect, in a fourth possible implementation of the first aspect, the power supply protection module detects the positive electrode voltage of the cell, and sends the detected positive electrode voltage of the cell to the power supply management chip via the set pin of the power supply.

In combination with the second possible implementation of the first aspect or the fourth possible implementation of the first aspect, in a fifth possible implementation of the first aspect, the set pin is an id pin or a fourth pin, and the fourth pin has an electrical connection function and a communication connection function.

In combination with the third possible implementation of the first aspect or the fourth possible implementation of the first aspect, in a sixth possible implementation of the first aspect, the method further includes: the power supply protection module detecting a current passing through a protection element connected in series between the negative electrode of the cell and the power supply management chip, and when it is detected that the current of the protect element exceeds a preset range, cutting off the protection element.

According to a second aspect of the embodiments of the present disclosure, there is provided a power supply charging circuit, including: a power supply and a power supply management chip, wherein the power supply includes a cell, the power supply management chip is electrically connected to a positive electrode and a negative electrode of the cell in the power supply, detects a positive electrode voltage of the cell, and controls a charging mode of the power supply according to the detected voltage of the cell.

In combination with the second aspect, in a first possible implementation of the second aspect, the power supply further includes a power supply protection module, a first detection end of the power supply protection module is connected to the positive electrode of the cell, and a first output end of the power supply protection module is connected to a third pin of the power supply management chip via a set pin of the power supply.

In combination with the second aspect, in a second possible implementation of the second aspect, the third pin of the power supply management chip is connected to the positive electrode of the cell via the set pin of the power supply.

In combination with the first possible implementation of the second aspect or the second possible implementation of the second aspect, in a third possible implementation of the second aspect, the set pin of the power supply is an id pin or a fourth pin of the power supply, and the fourth pin has an electrical connection function and a communication connection function.

In combination with the second aspect, in a fourth possible implementation of the second aspect, a first protection element is connected in series between the negative electrode of the cell and a negative electrode of the power supply, the first protection element includes a switch transistor, and the power supply protection module further includes a second detection end, a third detection end and a second output end, wherein the second detection end of the power supply protection module is electrically connected to a first end of the first protection element, the third detection end is electrically connected to a second end of the first protection element, the second output end is electrically connected to a control end of the switch transistor, the power supply protection module is further used to detect a current passing through the first protection element, and when the current exceeds a preset range, a control signal for turning off the switch transistor is output through the second output end.

According to a third aspect of the embodiments of the present disclosure, there is provided a power supply, characterized in that the power supply includes a positive pin, a negative pin, a set pin, a cell, a first protection element and a second protection element, wherein a positive electrode of the cell is connected to the positive pin of the power supply via the second protection element, and the positive electrode of the cell is connected to the set pin of the power supply, and is connected to a power supply management chip via the set pin, and a negative electrode of the cell is connected to a negative electrode of the power supply via the first protection element.

In combination with the third aspect, in a first possible implementation of the third aspect, the power supply further includes a power supply protection module, a first detection end of the power supply protection module is connected to the positive electrode of the cell, and a first output end is connected to the set pin of the power supply.

In combination with the first possible implementation of the third aspect, in a second possible implementation of the third aspect, the power supply protection module further includes a second detection end, a third detection end and a second output end, and the first protection element includes a switch transistor, wherein the second detection end of the power supply protection module is connected to a first end of the first protection element, the second detection end is connected to a second end of the first protection element, and the second output end is connected to a control end of the switch transistor, and is used to control a conducting state or a turn-off state of the switch transistor according to a detected current passing through the first protection element.

In combination with the second aspect or the first possible implementation of the second aspect, in a third possible implementation of the third aspect, the set pin of the power supply is an id pin or a fourth pin of the power supply, and the fourth pin has an electrical connection function and a communication connection function.

According to the fourth aspect of the embodiments of the present disclosure, there is provided a terminal device, including: a processor and a power supply charging circuit provided by the second aspect, wherein a power supply in the power supply charging circuit provides a working voltage for respective modules within the terminal device, and the processor is used to control a working state of a power supply management chip in the power supply charging circuit, and working states of other modules in the terminal device.

The technical solutions provided by the embodiments of the present disclosure may include the following advantageous effects: the power supply charging method directly collects a voltage across the two electrodes of a cell by a power supply management chip, and when the power supply management chip detects that a positive electrode voltage of the cell reaches a preset voltage, the power supply management chip controls a power supply to be converted from a constant current charging mode into a constant voltage charging mode. Compared with a charging circuit that detects a positive electrode voltage of a power supply, the power supply charging method provided by the present disclosure directly detects the voltage of the cell by the power supply management chip, thereby precisely controlling the timing at which the charging mode of the power supply is switched, maximally lengthening the constant current charging time, reducing the entire charging time of the power supply, and increasing the charging speed.

### BRIEF DESCRIPTION OF THE DRAWINGS

In order to explain the embodiments of the present disclosure or the technical solutions in the prior art more clearly, a simple introduction of the drawings to be used for describing the embodiments or the prior art will be given as follows.
Fig. 1a is a flow diagram showing a power supply charging method, according to an exemplary embodiment;
Fig. 1b is a diagram showing a charging time of a power supply charging method, according to an exemplary embodiment;
Fig. 2 is a flow diagram showing another power supply charging method, according to an exemplary embodiment;
Fig. 3 is a structural diagram showing a power supply charging circuit, according to an exemplary embodiment;
Fig. 4 is a structural diagram showing another power supply charging circuit, according to an exemplary embodiment;
Fig. 5 is a structural diagram showing still another power supply charging circuit, according to an exemplary embodiment;
Fig. 6 is a structural diagram showing yet still another power supply charging circuit, according to an exemplary embodiment;
Fig. 7 is a structural diagram showing yet still another power supply charging circuit, according to an exemplary embodiment;
Fig. 8 is a structural diagram showing a power supply, according to an exemplary embodiment;
Fig. 9 is a structural diagram showing another power supply, according to an exemplary embodiment;
Fig. 10 is a structural diagram showing still another power supply, according to an exemplary embodiment;
Fig. 11 is a structural diagram showing yet still another power supply charging circuit, according to an exemplary embodiment; and
Fig. 12 is a structural diagram showing yet still another power supply charging circuit, according to an exemplary embodiment.

Specific embodiments in this disclosure have been shown by way of example in the foregoing drawings and will be described in detail hereinafter. The drawings are not intended to limit the disclosure. Rather, they are provided to illustrate the inventive concepts of this disclosure to those skilled in the art with reference to particular embodiments.

### DETAILED DESCRIPTION

A power supply usually includes a cell and a protection circuit, wherein the protection circuit is used to protect charging and discharging processes of the cell, when a charging current or a discharging current of the cell is too large or a voltage of the cell is too low, the purpose of protecting the cell is achieved by limiting the current or cutting off the circuit in which the cell is positioned. Since the protection circuit has a certain voltage drop, the voltage of the power supply is not equal to the voltage of the cell inside the power supply. When the power supply is in a charging state, and the voltage of the power supply reaches a preset voltage, the voltage of the cell does not reached the preset voltage.

The embodiments of the present disclosure provide a power supply charging method which detects a voltage across the two electrodes of a cell in a power supply, and controls the charging mode of the power supply to be converted from a constant current charging mode into a constant voltage charging mode when it is determined that the positive electrode voltage of the cell is not lower than a preset voltage, thereby maximally lengthening the constant current charging time of the power supply, reducing the entire charging time of the power supply, and increasing the charging speed of the power supply.

The present disclosure will be further described in detail with reference to the accompanying drawings.

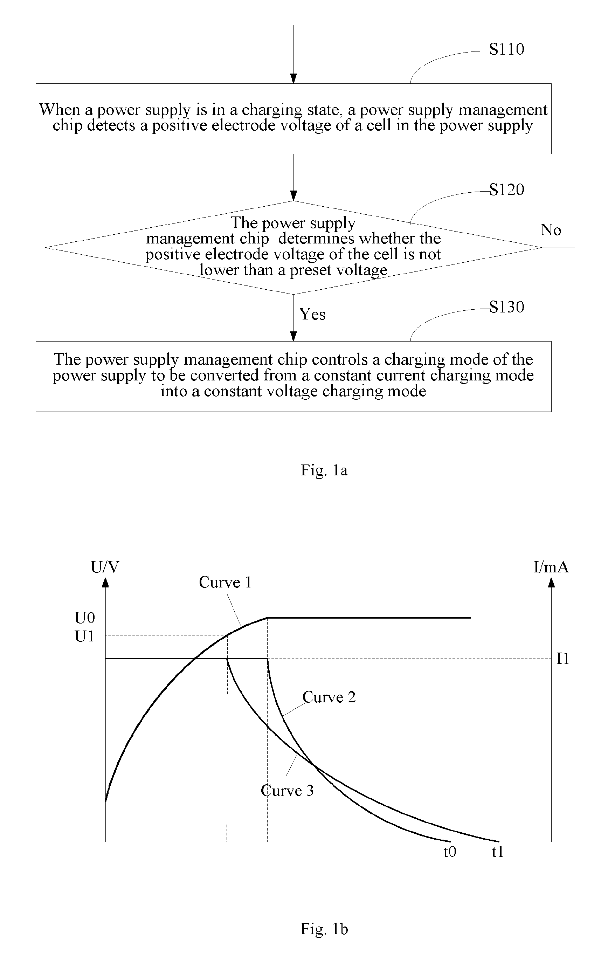

Fig. 1a is a flow diagram showing a power supply charging method, according to an exemplary embodiment. The method is applied in a power supply charging circuit, and the method includes the following steps.

In step S110, when a power supply is in a charging state, a power supply management chip detects a positive electrode voltage of a cell in the power supply.

It is to be explained that, the power supply in the embodiments of the present disclosure may be a battery in a mobile terminal device (such as a mobile phone, a PDA or the like), or may be electricity storage means in other devices, but is not limited to such devices..

In one embodiment of the present disclosure, the power supply management chip is electrically connected to a positive electrode and a negative electrode of the cell, and when the power supply is in the charging state, the power supply management chip detects a voltage across the positive electrode and the negative electrode of the cell. Usually, the negative electrode of the cell is electrically connected to a ground end, thus a corresponding pin of the power supply management chip is also electrically connected to the ground end, so it is only required that another corresponding pin of the power supply management chip is electrically connected to the positive electrode of the cell, so as to detect the positive electrode voltage of the cell. The power supply management chip is electrically connected to a set pin of the power supply, to detect the positive electrode voltage of the cell, wherein the set pin is electrically connected to the positive electrode of the cell.

In one embodiment of the present disclosure, the set pin of the power supply may be a newly-added pin in the power supply, the newly-added pin is electrically connected to the positive electrode of the cell in the power supply, and may be electrically connected directly, and the power supply management chip detects a voltage of the newly-added pin of the power supply to obtain the positive electrode voltage of the cell.

The power supply management chip may also acquire a power supply id number that represents the identity of the power supply via an id pin of the power supply. In step S120, the power supply management chip determines whether the detected positive electrode voltage of the cell is not lower than a preset voltage, and when it is determined that the positive electrode voltage of the cell is not lower than the preset voltage, step S130 is performed; and when the positive electrode voltage of the cell is lower than the preset voltage, it returns to perform the step S110. The preset voltage may be determined according to a voltage when the power supply is fully charged, for example, the preset voltage may be 4.35 V.

In step S130, the power supply management chip controls the charging mode of the power supply to be converted from a constant current charging mode into a constant voltage charging mode.

Fig. 1b is a diagram showing a charging voltage and a charging current vs charging times, according to an exemplary embodiment, wherein a horizontal axis refers to time, and a longitudinal axis on the left refers to voltage, and a longitudinal axis on the right refers to current. Curve 1 in Fig. 1b refers to a charging voltage changing curve of a constant current-constant voltage charging mode. Curve 2 refers to a charging current changing curve corresponding to the power supply charging method provided by the embodiment of the present disclosure, and Curve 3 refers to a current changing curve of a conventional constant current-constant voltage charging mode. Assume it is detected that a voltage of the positive electrode of the power supply is higher than a voltage of the cell inside in the power supply, and it is assumed that a preset voltage U0 is 4.35V, therefore, when it is detected that the voltage of the positive electrode of the power supply reaches 4.35V, after a voltage drop is removed, a voltage drop U1 of the cell in the power supply may be 4.05V, at this time, the charging mode of the power supply is switched from a constant current mode into a constant voltage mode, the corresponding charging current change is as shown in the Curve 3, and a timing at which a charging is completed is t1; and when the power supply charging method provided by the present disclosure detects that a positive electrode voltage U0 of the cell is 4.35V, the charging mode of the power supply is converted from the constant current mode into the constant voltage mode, the corresponding charging current change is as shown in the Curve 2, and a timing at which a charging is completed is t0, and it can be seen that t0 is smaller than t1. Since the power supply charging method of the present disclosure lengthens the constant current charging time, the corresponding constant voltage charging time is shorted, thereby reducing the entire charging time of the power supply, and increasing the charging speed.

In the power supply charging method provided by the present embodiment, when the power supply is in the charging state, the power supply management chip directly detects the positive electrode voltage of the cell inside the power supply, and controls the charging mode of the power supply according to the detected positive electrode voltage. Compared with the method for detecting the positive electrode voltage of the power supply to control the charging mode of the power supply, directly detecting the positive electrode voltage of the cell is of high precise, the timing at which the charging mode of the power supply is controlled to be converted from the constant current mode into the constant voltage mode is precise, thereby maximally lengthening the constant current charging time, reducing the entire charging time of the power supply, and increasing the charging speed.

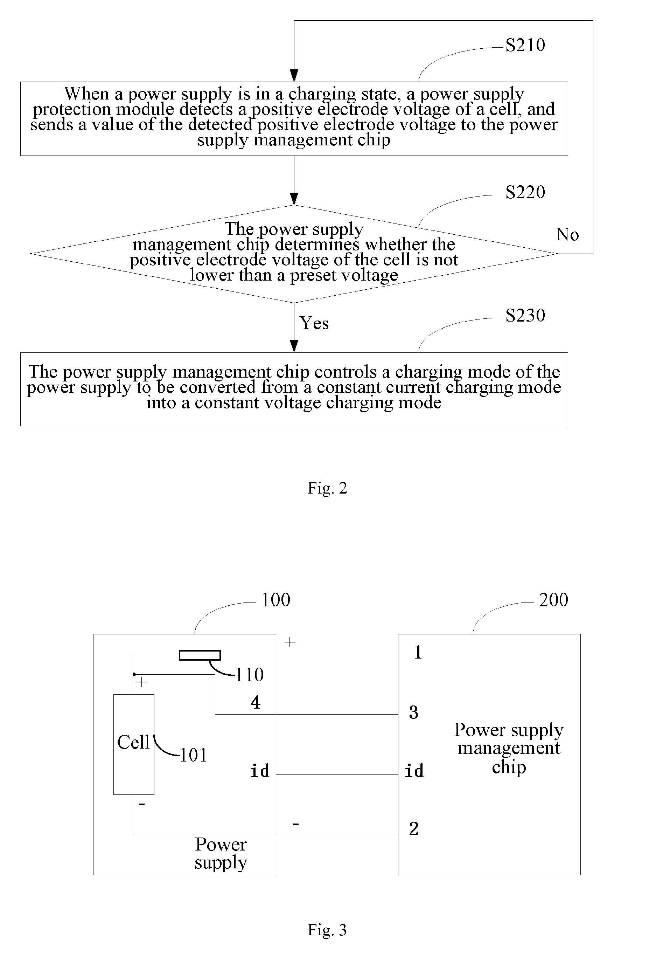

Fig. 2 is a flow diagram showing another power supply control method, according to an exemplary embodiment, which differs from the embodiment corresponding to Fig. 1 in that, the positive electrode voltage of the cell is detected by a power supply protection module. The method is applied in the power supply charging circuit, wherein the power supply includes the cell and the power supply protection module; and the method may include the following steps.

In step S210, when the power supply is in the charging state, the power supply protection module detects the positive electrode voltage of the cell, and sends a value of the detected positive electrode voltage to the power supply management chip.

In one embodiment of the present disclosure, the power supply protection module sends the detected positive electrode voltage of the cell to the power supply management chip via a set pin of the power supply. The set pin may be a new pin such as a fourth pin added on the power supply, and the fourth pin has an electrical connection function and a communication connection function.

In another embodiment of the present disclosure, the power supply protection module sends the detected positive electrode voltage of the cell to the power supply management chip via an id pin of the power supply, meanwhile, the power supply management cell may also acquire a power supply id number that represents an identity of the power supply via the id pin of the power supply. The id pin of the power supply is a multiplex pin, and has an electrical connection function and a communication connection function. Such a mode need not add a new pin on the power supply, thereby reducing production costs of the power supply.

In step S220, the power supply management chip determines whether the positive electrode voltage of the cell is not lower than a preset voltage, when it is determined that the positive electrode voltage of the cell is not lower than the preset voltage, step S230 is performed; and when the positive electrode voltage of the cell is lower than the preset voltage, it returns to perform the step S210.

In step S230, the charging mode of the power supply is controlled to be converted from a constant current charging mode into a constant voltage charging mode.

In the power supply charging method provided by the embodiments of the present disclosure, the power supply protection module within the power supply detects the positive electrode voltage of the cell, and sends the detected positive electrode voltage of the cell to the power supply management chip, and the power supply management chip controls the charging mode of the power supply according to the received positive electrode voltage of the cell. Compared with the method for detecting the positive electrode voltage of the power supply to control the charging mode of the power supply, directly detecting the positive electrode voltage of the cell is highly precise, the timing at which the charging mode of the power supply is controlled to be converted from the constant current mode into the constant voltage mode is precise, thereby maximally lengthening the constant current charging time, reducing the entire charging time of the power supply, and increasing the charging speed.

In one embodiment, on the basis of the embodiment corresponding to Fig.2, the power supply protection module is further used to detect a state of a protection element within the cell, and when an abnormal situation occurs to the power supply, the cell is protected by controlling the protection element to be turned off. The method may also include the following steps.
1) The power supply protection module detects a current passing through the protection element connected in series between the negative electrode of the cell and the power supply management chip; and
2) when it is detected that the current of the protection element exceeds a preset range, the protection element is cut off. The protection element may include a switch transistor, and the power supply protection module may cut off the protection element by controlling the switch transistor to be turned off, so as to finally achieve the protection of the cell.

Corresponding to the above embodiment of the power supply charging method, the present disclosure further provides a power supply charging circuit.

Fig. 3 is a structural diagram showing a power supply charging circuit, according to an exemplary embodiment. As shown in Fig. 3, the power supply charging circuit includes a power supply 100 and a power supply management chip 200, wherein the power supply 100 includes a positive pin, a negative pin, an id pin and a fourth pin 4. The power supply 100 includes at least a cell 101 and a protection circuit (not shown in Fig. 3) therein. The negative electrode of the cell is electrically connected to the negative electrode of the power supply, and usually, the negative electrode of the power supply is electrically connected to a ground end.

A second protection element 110 is connected between the positive electrode of the cell and the positive electrode of the power supply, the second protection element 110 may be a thermal resistor having a positive temperature coefficient, and when a charging current or a discharging current of the cell is too large, the temperature of the thermal resistor rises, the impedance value of the thermal resistor increases in a step mode that functions to restrict the current, thereby prevents the cell from being impacted by a large current and functions to protect the cell; and after the fault is removed, the temperature of the thermal resistor is decreased, and the thermal resistor is restored to a low impedance state.

The power supply in the embodiments of the present disclosure may be a battery in a mobile terminal device (such as a mobile phone, a PDA or the like), or may be electricity storage means in other devices, but is not limited to such devices..

A first pin 1 of the power supply management chip 200 is electrically connected to the positive electrode of the power supply, a second pin 2 is electrically connected to the negative electrode of the power supply, a third pin 3 is connected to the positive electrode of the cell 101 via the fourth pin 4 of the power supply, wherein the fourth pin has an electrical connection function and a communication connection function. The id pin of the power supply is electrically connected to an id pin of the power supply management chip.

The power supply management chip 200 detects the positive electrode voltage of the cell 101 via the fourth pin 4 of the power supply, and controls the charging mode of the power supply according to the detected positive electrode voltage of the cell, and the charging mode includes a constant current charging mode and a constant voltage charging mode.

When the power supply management chip 200 detects that the positive electrode voltage of the cell is not lower than a preset voltage, the power supply management chip 200 controls the charging mode of the power supply to be switched from the constant current mode into the constant voltage mode.

In the power supply charging circuit provided by the present embodiment, the third pin of the power supply management chip is electrically connected to the positive electrode of the cell within the power supply via the fourth pin of the power supply, thereby achieving direct detection of the positive electrode voltage of the cell and control of the charging mode of the power supply according to the positive electrode voltage of the cell, therefore, when such a power supply charging circuit is compared with the circuit for detecting the positive electrode voltage of the power supply, the timing at which the charging mode of the power supply is controlled to be converted from the constant current mode into the constant voltage mode is precise, thereby maximally lengthening the constant current charging time, reducing the entire charging time of the power supply, and increasing the charging speed.

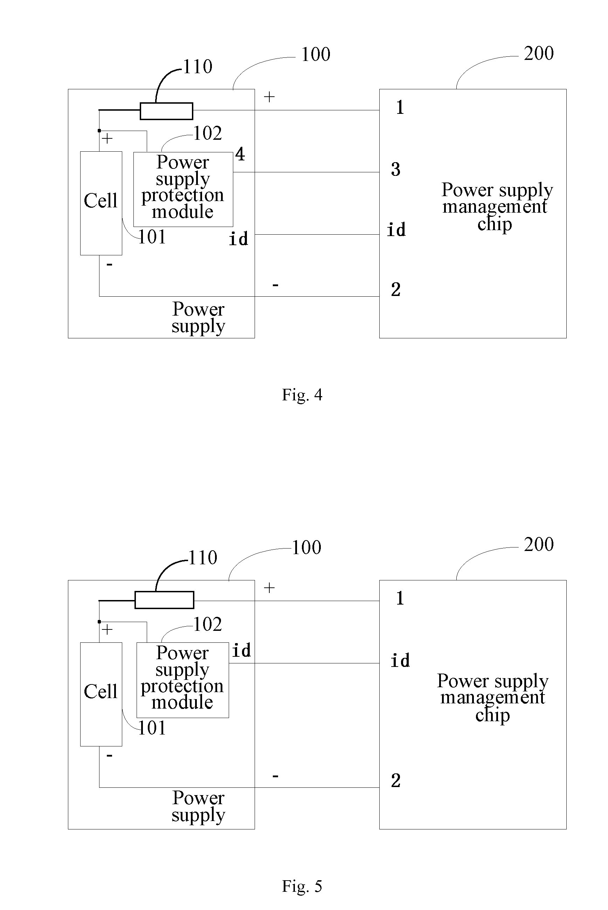

Fig. 4 is a structural diagram showing another power supply charging circuit, according to an exemplary embodiment, which differs from the power supply charging circuit shown in Fig.3 in that, the power supply is further provided with a power supply protection module 102 therein.

A first detection end of the power supply protection module 102 is electrically connected to the positive electrode of the cell, a first output end as the fourth pin 4 of the power supply is electrically connected to the power supply management chip 200, and the fourth pin 4 also has a communication connection function. The power supply protection module 102 detects the positive electrode voltage of the cell via the first detection end and sends the detected positive electrode voltage of the cell to the power supply management chip 200 via the fourth pin 4.

The power supply management chip 200 determines whether the received positive electrode voltage of the cell is not lower than a preset voltage, and when the positive electrode voltage of the cell is not lower than the preset voltage, the power supply management chip 200 controls the charging mode of the power supply to be switched from a constant current charging into a constant voltage charging, thereby maximally lengthening the constant current charging time, reducing the entire charging time of the power supply, and increasing the charging speed.

Fig. 5 is a structural diagram showing a power supply charging circuit, according to an exemplary embodiment, which differs from the embodiment shown in Fig. 4 in that, the power supply protection module 102 sends the detected positive electrode voltage of the cell to the power supply management chip via the id pin of the power supply. That is, the id pin of the power supply is a multiplex pin for an electrical connection and a communication connection, without adding a new pin on the power supply, thereby reducing production costs of the power supply charging circuit.

The first detection end of the power supply protection module 102 is electrically connected to the positive electrode of the cell, the first output end is electrically connected to the id pin of the power supply, and sends the detected positive electrode voltage of the cell to the power supply management chip 200 via the id pin of the power supply. The power supply management chip 200 determines whether the positive electrode voltage of the cell is not lower than the preset voltage, and if the positive electrode voltage of the cell is not lower than the preset voltage, the power supply management chip 200 controls the charging mode of the power supply to be switched from the constant current mode into the constant voltage mode, thereby maximally lengthening the time of a constant current charging mode, shortening the entire charging time of the power supply, and increasing the charging speed of the power supply.

In the power supply charging circuit provided by the present embodiment, the positive electrode voltage of the cell detected by the power supply protection module within the power supply is sent to the power supply management chip by using the existing id pin of the power supply in a multiplex mode, thus it need not add a new pin on the power supply, thereby reducing production costs of the power supply charging circuit.

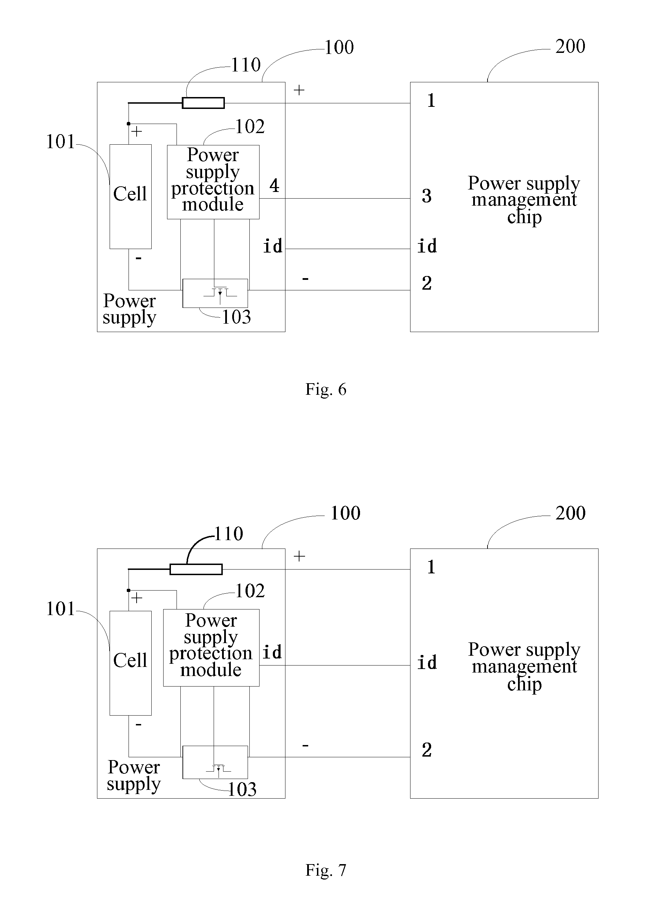

Fig. 6 is a structural diagram showing still another power supply charging circuit, according to an exemplary embodiment, the negative electrode of the cell within the power supply is connected with a first protection element, and the power supply protection module in the embodiment shown in Fig.6 further has a function of cutting off the protection element to protect the cell from being damaged when an abnormal situation occurs to the power supply, by detecting the state of the protection element within the power supply, that is, the power supply protection module in the present embodiment may both detect the state of the protection element within the power supply, and detect the positive electrode voltage of the cell and send the detected positive electrode voltage of the cell to the power supply management chip.

As shown in Fig. 6, the first protection element 103 is connected in series to the negative electrode of the cell, the first protection element 103 includes a switch transistor; and the power supply protection module 102 further includes a second detection end, a third detection end and a second output end.

The second detection end of the power supply protection module 102 is electrically connected to a first end of the first protection element 103, the third detection end is electrically connected to a second end of the first protection element 103, and the second output end is electrically connected to a control end of the switch transistor; and the power supply protection module is further used to detect a current passing through the first protection element 103, and when the current exceeds a preset range, a control signal for turning off the switch transistor is output through the second output end. Thereby, , when a charging current or a discharging current of the power supply is too large, a cut-off by the first protection element 103 to prevent the cell from being impacted by a large current may be achieved, guaranteeing the safety of the cell, and lengthening service life of the cell.

The switch transistor may be selected from a MOS transistor (Metal Oxide Semiconductor), wherein the control end of the switch transistor is a gate electrode of the MOS transistor. Rather, the switch transistor may also adopt other types of transistors.

In the power supply charging circuit provided by the present embodiment, on the basis of the intrinsic function of the original power supply protection module of the power supply, a new function of detecting the positive electrode voltage of the cell is added, therefore, compared with adding a new function module, it reduces the occupying area of the circuit layout within the power supply, thereby reduces the volume of the power supply charging circuit, and reduces the volume of a terminal device that uses this power supply charging circuit.

Fig. 7 is a structural diagram showing a power supply charging circuit, according to an exemplary embodiment, which differs from the embodiment shown in Fig. 6 in that, the first output end of the power supply protection module is electrically connected to the id pin of the power supply, that is, the id pin is used as a multiplex pin for an electrical connection and a communication connection. The power supply protection module may both detect the state of the first protection element in the power supply and detect the positive electrode voltage of the cell at the same time, and send the detected positive electrode of the cell to the power supply management chip 200 via the id pin.

After the power supply charging circuit provided by the present embodiment adds the new function for the power supply protection chip within the power supply, the power supply charging circuit further uses the id pin of the power supply in a multiplex mode, such that the id pin has an electrical connection function and a communication connection function, without adding a new pin on the power supply, which reduces production costs of the power supply, and reduces production costs of the power supply charging circuit.

Corresponding to the above embodiment of the power supply charging circuit, the present disclosure further provides an embodiment of the power supply.

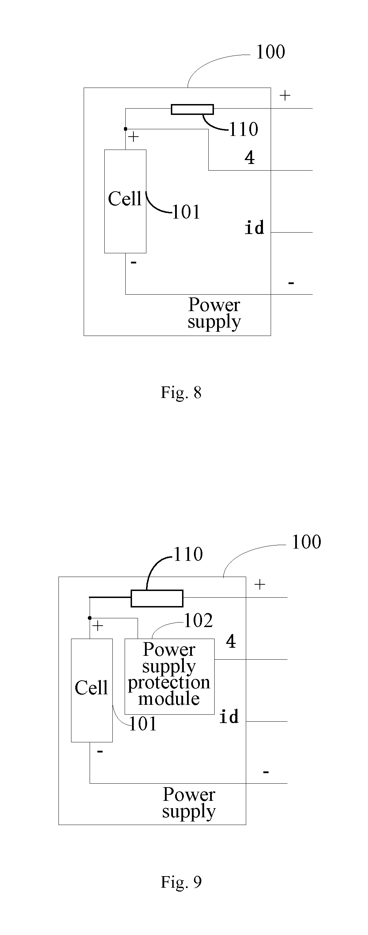

Fig. 8 is a structural diagram showing a power supply, according to an exemplary embodiment, which is the same as the structure of the power supply in the power supply charging circuit shown in Fig.3. The power supply in the embodiments of the present disclosure may be a battery in a mobile terminal device (such as a mobile phone, a tablet computer or the like), or may be an electricity storage means in other devices, for example.

The pins of the power supply include the positive pin, the negative pin, the id pin and the fourth pin 4, the power supply100 includes the cell 101 and the protection circuit (not shown in Fig. 8) therein. The positive electrode of the cell is electrically connected to the fourth pin of the power supply, and sends the positive electrode voltage of the cell to the power supply management chip via the fourth chip 4.

Wherein the positive electrode of the cell is connected in series to an end of the second protection element 110, another end of the second protection element 110 is used as the positive pin of the power supply. The second protection element 110 may be a thermal resistor having a positive temperature coefficient, and when a charging current or a discharging current of the cell is too large, the temperature of the thermal resistor rises, the impedance value of the thermal resistor increases in a step mode that functions to restrict the current, thereby prevents the cell from being impacted by a large current and functions to protect the cell; and after the fault is removed, the temperature of the thermal resistor is decreased, and the thermal resistor is restored to a low impedance state.

In the power supply provided by the present embodiment, the positive electrode of the cell inside the power supply is electrically connected to the fourth pin of the power supply, thereby the power supply management chip directly detects the positive electrode voltage of the cell via the fourth pin of the power supply, then the power supply management chip controls the charging mode of the power supply according to the positive electrode of the cell.

Fig. 9 is a structural diagram showing another power supply, according to an exemplary embodiment, which is the same as the structure of the power supply in the power supply charging circuit shown in Fig.4.

As shown in Fig. 9, the power supply further includes the power supply protection module 102, the first detection end of the power supply protection module 102 is electrically connected to the positive electrode of the cell, the first output end as the fourth pin of the power supply is electrically connected to the power supply management chip 200, the fourth pin also has a communication connection function, and the power supply protection module detects the positive electrode voltage of the cell via the first detection end and sends the detected positive electrode voltage of the cell to the power supply management chip 200 via the fourth pin.

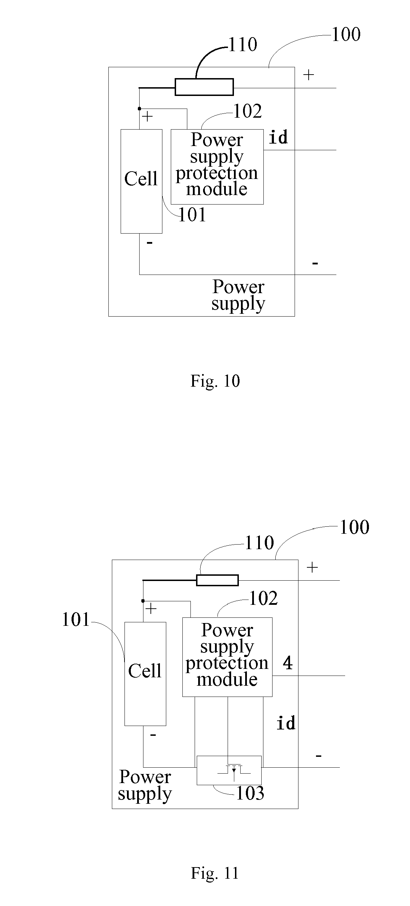

Fig. 10 is a structural diagram showing still another power supply, according to an exemplary embodiment, which is the same as the structure of the power supply in the power supply charging circuit shown in Fig.5, and differs from the power supply shown in Fig.9 in that, the first output end of the power supply protection module 102 is electrically connected to the id pin of the power supply, and the power supply protection module 102 sends the detected positive electrode voltage of the cell to the power supply management chip via the id pin of the power supply. That is, the id pin of the power supply is used as a multiplex pin for an electrical connection and a communication connection, without adding a new pin on the power supply, thereby reducing production costs of the power supply.

Fig. 11 is a structural diagram showing yet still another power supply, according to an exemplary embodiment, which is the same as the structure of the power supply in the power supply charging circuit shown in Fig.6, and differs from the power supply shown in Fig.9 in that, the power supply protection module 102 may both detect the state of the protection element within the power supply and detect the positive electrode voltage of the cell, and send the detected positive electrode voltage of the cell to the power supply management chip.

The first protection element 103 is connected in series to the negative electrode of the chip, and the protection element 103 includes a switch transistor; and the power supply protection module 102 further includes a second detection end, a third detection end and a second output end.

The second detection end of the power supply protection module 102 is electrically connected to a first end of the first protection element 103, the third detection end is electrically connected to a second end of the first protection element 103, and the second output end is electrically connected to a control end of the switch transistor; and the power supply protection module is further used to detect a current passing through the first protection element 103, and when the current exceeds a preset range, a control signal for turning off the switch transistor is output through the second output end. Thereby, when a charging current or a discharging current of the power supply is too large, a cut-off by the first protection element 103 to prevent the cell from being impacted by a large current may be achieved, guaranteeing the safety of the cell, and lengthening service life of the cell.

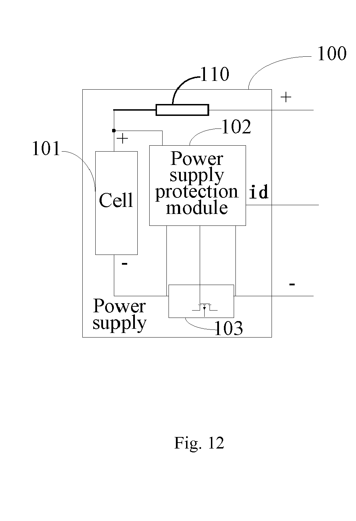

Fig. 12 is a structural diagram showing yet still another power supply, according to an exemplary embodiment, which is the same as the structure of the power supply in the power supply charging circuit shown in Fig. 7, and differs from the power supply shown in Fig. 11 in that, the first output end of the power supply protection module is electrically connected to the id pin of the power supply, that is, the id pin of the power supply is used as a multiplex pin for an electrical connection and a communication connation, without adding a new pin on the power supply, thereby reducing production costs of the power supply.

Corresponding to the above embodiment of the power supply charging circuit, the present disclosure further provides a terminal device, including: a processor, any power supply charging circuit provided by the above embodiments, and other modules, the said other modules may include an RF (Radio Frequency) circuit, a storage for a readable storage medium, an input unit, a display unit, a sensor, an audio circuit and a WiFi module or the like.

Wherein the power supply in the power supply charging circuit provides a working voltage for various modules in the terminal device; and the processor is used to control working states of the power supply management chip in the power supply charging circuit and other modules in the terminal device.

Those skilled in the art will readily appreciate that the respective embodiments in this specification are described in a stepwise mode, same or similar portions among the respective embodiments may refer to each other, each embodiment explains different portions from other embodiments, and related portions may refer to the descriptions of the corresponding embodiments. A portion of or all the modules may be selected to achieve the purpose of the solutions of the present embodiment according to actual needs.

It is explained that, in the context, relationship terms such as "first" and "second" are only used to distinguish one entity or operation from another entity or operation, it is not necessary to imply or require that these entities or operations have the actual relationship or sequence. Moreover, terms "including", "comprising" or any other variant mean to cover non-exclusive including, so that a process, a method, an article or a device including a series of elements not only includes those elements but also includes other elements that are not clearly listed, or further includes elements naturally possessed by the process, the method, the article, or the device. Without limitation, elements defined by the phase "including a ..." do not exclude the fact that the process, the method, the article or the device including the elements further includes other same elements.

## Claims

1. A power supply charging method, **characterized in that**, the method comprises:
when a power supply (100) is in a charging state, a power supply management chip (200) detecting (S110) a positive electrode voltage of a cell (101) in the power supply; and
comparing (S120) the detected positive electrode voltage of the cell with a preset voltage, and when it is determined that the positive electrode voltage of the cell is not lower than the preset voltage, controlling (S130) a charging mode of the power supply to be converted from a constant current charging mode into a constant voltage charging mode.

2. The method according to claim 1, wherein, the method comprises:
the power supply management chip (200) being electrically connected to a positive electrode and a negative electrode of the cell (101), and when the power supply is in the charging state, the power supply management chip detecting a voltage across the two electrodes of the cell.

3. The method according to claim 2, wherein, the power supply management chip (200) is electrically connected to the positive electrode of the cell (101) via a set pin of the power supply (100).

4. The method according to claim 1, wherein, the method comprises:
when the power supply (100) is in the charging state, a power supply protection module (102) in the power supply detecting (S210) the positive electrode voltage of the cell (101), and sending a value of the detected positive electrode voltage to the power supply management chip (200).

5. The method according to claim 4, wherein, the power supply protection module (102) detects the positive electrode voltage of the cell (101), and sends the positive electrode voltage of the cell to the power supply management chip (200) via the set pin of the power supply (100).

6. The method according to claim 3 or 5, wherein, the set pin is an id pin or a fourth pin, and the fourth pin has an electrical connection function and a communication connection function.

7. The method according to claim 4 or 5, wherein, the method further comprises:
the power supply protection module (102) detecting a current passing through a protection element connected in series between the negative electrode of the cell (101) and the power supply management chip (200); and
when it is detected that the current of the protect element exceeds a preset range, cutting off the protection element.

8. A power supply charging circuit, **characterized in that**, the circuit comprises: a power supply (100) and a power supply management chip (200), wherein
the power supply comprises a cell (101), the power supply management chip is electrically connected to a positive electrode and a negative electrode of the cell in the power supply to detect a positive electrode voltage of the cell, and controls a charging mode of the power supply according to the detected voltage of the cell.

9. The circuit according to claim 8, wherein, the power supply (100) further comprises a power supply protection module (102), wherein
a first detection end of the power supply protection module (102) is connected to the positive electrode of the cell, and a first output end of the power supply protection module is connected to a third pin of the power supply management chip via a set pin of the power supply.

10. The circuit according to claim 8, wherein, the third pin of the power supply management chip (200) is connected to the positive electrode of the cell (101) via the set pin of the power supply.

11. The circuit according to claim 9 or 10, wherein, the set pin of the power supply (100) is an id pin or a fourth pin of the power supply, and the fourth pin has an electrical connection function and a communication connection function.

12. The circuit according to claim 8, wherein, a first protection element (103) is connected in series between the negative electrode of the cell and a negative electrode of the power supply, and the first protection element comprises a switch transistor, and the power supply protection module (102) further comprises a second detection end, a third detection end and a second output end, wherein
the second detection end of the power supply protection module (102) is electrically connected to a first end of the first protection element (103), the third detection end is electrically connected to a second end of the first protection element, the second output end is electrically connected to a control end of the switch transistor, the power supply protection module is further used to detect a current passing through the first protection element, and when the current exceeds a preset range, a control signal for turning off the switch transistor is output through the second output end.

13. A power supply, **characterized in that**, the power supply (100) comprises a positive pin, a negative pin, a set pin, a cell, a first protection element (103) and a second protection element (110), wherein
a positive electrode of the cell is connected to the positive pin of the power supply via the second protection element, and the positive electrode of the cell is connected to the set pin of the power supply, and is connected to a power supply management chip via the set pin, and
a negative electrode of the cell is connected to a negative electrode of the power supply via the first protection element.

14. The power supply according to claim 13, wherein, the power supply (100) further comprises a power supply protection module (102), a first detection end of the power supply protection module is connected to the positive electrode of the cell (101), and a first output end is connected to the set pin of the power supply.

15. The power supply according to claim 14, wherein, the power supply protection module (102) further comprises a second detection end, a third detection end and a second output end, and the first protection element (103) comprises a switch transistor, wherein
the second detection end of the power supply protection module is connected to a first end of the first protection element, the second detection end is connected to a second end of the first protection element, the second output end is connected to a control end of the switch transistor, and is used to control a conducting state or a turn-off state of the switch transistor according to a detected current passing through the first protection element.

16. The power supply according to claim 13 or 14, wherein, the set pin of the power supply (100) is an id pin or a fourth pin of the power supply, and the fourth pin has an electrical connection function and a communication connection function.

17. A terminal device, **characterized in that**, the terminal device comprises a processor and the power supply charging circuit according to any one of claims 8-12, wherein
the power supply in the power supply charging circuit provides a working voltage for respective modules in the terminal device, and
the processor is used to control a working state of the power supply management chip in the power supply charging circuit, and working states of other modules in the terminal device.

18. A computer program, which when executing on a processor, performs the method according to any one of claims 1 to 7.
